# EUROPEAN PATENT SPECIFICATION

(11) **EP 1 767 396 B1**
(45) Date of publication and mention of the grant of the patent: **21.09.2011**
(21) Application number: 05734644.7
(22) Date of filing: 20.04.2005
(51) Int. Cl.: B60N 2/42

(54) **WAIST RESTRAINING AIRBAG DEVICE AND SEAT CUSHION DEVICE USING THE SAME**
BECKENRÜCKHALTEAIRBAGVORRICHTUNG UND DIESE VERWENDENDE SITZKISSENVORRICHTUNG
DISPOSITIF À COUSSIN D"AIR POUR IMMOBILISER LA TAILLE ET DISPOSITIF DE COUSSIN DE SIÈGE UTILISANT CELUI-CI

(30) Priority: 01.07.2004 JP 2004195464
(43) Date of publication of application: 28.03.2007
(73) Proprietor: AUTOLIV DEVELOPMENT AKTIEBOLAG, 447 83 Vargarda (SE)
(72) Inventor: KAKIYA, Masaharu, c/o Autoliv Japan Ltd., Kasumigaura-shi, Ibaraki 3158520 (JP); KORECHIKA, Koji, c/o Autoliv KK., Yokohama-shi, Kanagawa 2220033 (JP); TANMACHI, Ken, c/o Autoliv Japan Ltd., Kasumigaura-shi, Ibaraki 3158520 (JP); SHIMONO, Hiroyoshi, c/o Autoliv Japan Ltd., Kasumigaura-shi, Ibaraki 3158520 (JP)
(74) Representative: Schön, Thilo
(86) International application number: PCT/JP2005/007512
(87) International publication number: WO 2006/003749

(56) References cited:
- DE-A1- 10 320 967
- GB-A- 2 357 466
- JP-A- 2002 079 861
- JP-A- 2003 517 966
- JP-A- 2004 001 691
- JP-A- 2004 009 799
- JP-A- 2004 175 128

## Description

### [TECHNICAL FIELD]

The present invention relates, for example, to an airbag device for a vehicle with a waist restraining function which restrains an occupant to a seat in an emergency to protect the occupant. The present invention relates in particular to a waist restraining airbag device according to the preamble claim 1. Such a device is known from Patent Related Document 3.

### [BACKGROUND ART]

When a forward collision of a vehicle is occurred, an occupant tends to be moved in a forward direction according to inertia. If the occupant fastens a seatbelt, forward movement of the occupant would be restrained to some extent by restraining function of a shoulder belt and a waist belt of a seat belt device. In order to secure the restraining of an occupant, a waist restraining device has been proposed (referring, for example, Patent Related Document 1; Patent Related Document 2 and Patent Related Document 3), which uses technology limiting forward movement of an occupant by lifting a forward end of a seat cushion immediately when the vehicle is forward-crushed and is quickly decelerated.

[Patent Related Document 1] JP H05-229378A
[Patent Related Document 2] JP H10-217818A
**[Patent Related Document 3]** GB 2357466

### [DISCLOSURE OF INVENTION]

### [Problems to be solved by the present invention]

According to conventional waist restraining devices, however, an occupant would get on an airbag, if an airbag (inflatable bag) is slightly delayed for development; and therefore, sufficient restraining performance could not be obtained. Further, according to a structural limitation under a seat cushion, an arrangement of an airbag is restricted; so that the airbag could not be located adjacent the waist of an occupant and therefore, it would be hard to restrain the occupant immediately.

The present invention is made based on the above-described situation, and an object of the present invention is to provide a waist restraining airbag device which contributes to improvement in performance of restraining the waist of a vehicle occupant.

### [Solution for Achieving the Purpose]

In order to achieve the above-described object, a waist restraining airbag device according to the present invention is disposed in or under a seat cushion of a vehicle and adapted to restrain in an emergency the waist of an occupant sitting on the seat cushion so as to limit occupant's forward movement, wherein the airbag device includes an airbag arranged in an inflatable and expandable state, with at least a part of its bottom surface fixed; and a gas supply device for supplying inflation gas to the interior of the airbag. Further, the expansion direction of the airbag is inclined from a direction vertical to the bottom surface.

Here, the angle of inclination of an airbag inflation includes forward and backward of the vehicle. If the developing direction of the airbag is inclined forwardly, an occupant would be prevented from getting on the airbag and sufficient restraining performance could be provided. On the other hand, if the developing direction of the airbag is inclined backwardly, it could be possible to restrict a waist (pelvis) of the occupant immediately after development of the airbag. In either case, it is not necessary to change arrangement of an airbag device under a seat cushion, where there is a plenty of arrangement limitations, and therefore, the airbag device could be applied to a variety of types of vehicles.

In the above-described present invention, preferably, the airbag includes a main body shaped to be tubular extending in right and left direction of the vehicle; and side face members, which close both side faces (right and left faces) of the main body and are shaped to be parallelograms when the airbag is inflated. Further, the airbag may be folded offset in forward or backward direction of the vehicle between upper and lower portions.

### [BEST MODE FOR CARRYING OUT THE INVENTION]

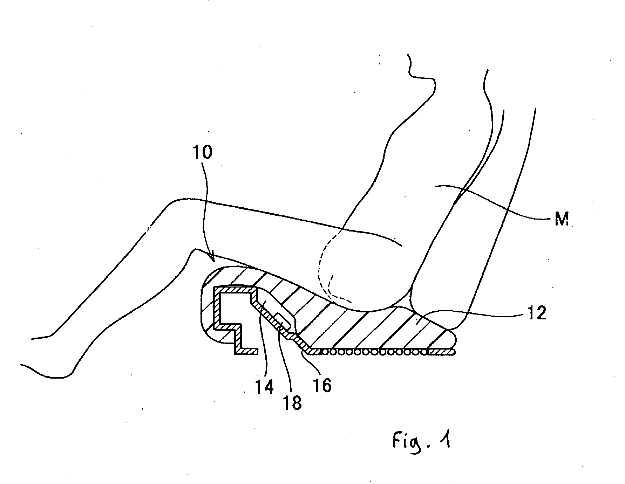

Fig. 1 is an explanation drawing showing a working condition (installation condition) of a waist restraining airbag device according to an embodiment of the present invention, wherein the airbag is in a condition before development. A waist restraining airbag device 10, according to the embodiment, is disposed in or under a seat cushion 12 of a vehicle and adapted to restrain in an emergency (when a vehicle collision occurs) the waist of an occupant M sitting on the seat cushion 12 so as to limit occupant's forward movement. The airbag device 10 includes an airbag (inflatable bag) 14 arranged in an inflatable and expandable condition, with at least a part of its bottom surface (20a) fixed; and an inflator 18 for supplying inflation gas to the interior of the airbag 14. The airbag 14 may be made of a metal sheet having a thickness of about 0.4mm or a molded resin sheet having a thickness greater than the metal sheet.

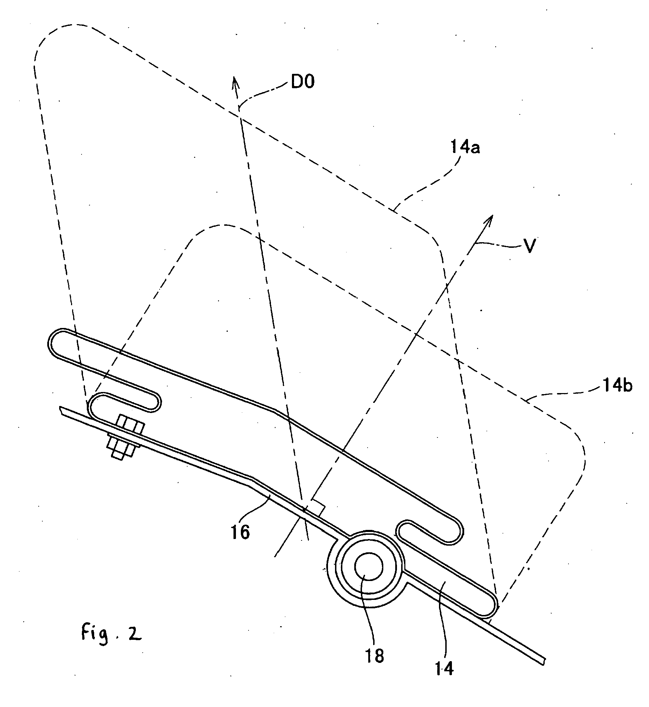

Fig. 2 is a side view illustrating a structure of the airbag device 10. As shown in Fig. 2, the airbag 14 is expandable while being inclined in a forward direction of the vehicle from a vertical direction "V" to the bottom surface (20a). The inclined direction is indicated by "DO". A broken line 14b shows a conventional airbag with rectangle side surfaces in a developed state. A broken line 14a shows the airbag 14 with parallelogram side surfaces (22) in a developed state. According to this embodiment, the side faces of the airbag 14 are located at right and left ends of the airbag extending in a width direction (right and left direction) of the vehicle seat. Further, if each side face 22 of the airbag 14 in a developed state is almost parallelogram, a developing direction of the airbag 14 could be expressed by a direction parallel to left and right lines (front and rear direction to the occupant) of the parallelogram.

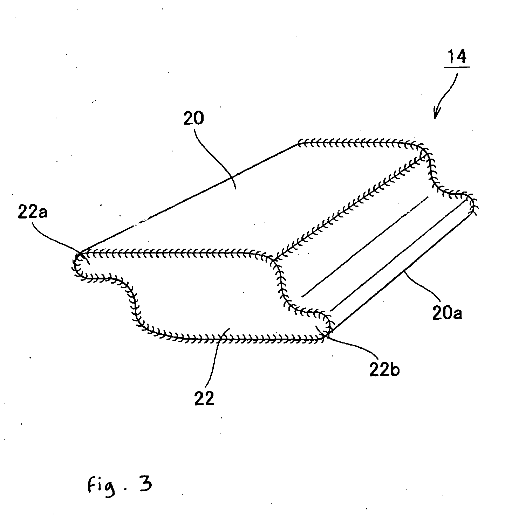

Fig. 3 is a perspective view illustrating a structure of the airbag 14. The airbag 14 includes a main body 20 shaped to be tubular extending in a right and left direction of the vehicle (rolling up in front-back direction); and side face members 22, which close both side faces (right and left faces) of the main body 20. In the drawing, regions with short diagonal lines are welded. Namely, a region where ends of belt-shaped metal sheet, forming the tubular main body 20, are in contact with each other and a region where left and right sides of the main body 20 (ends of tubular) and the side face members 22 are in contact with each other are welded. The airbag 14 in a non-developed and accommodated state is folded to be offset (uneven) in forward or backward direction of the vehicle between upper and lower portions, as shown in Figs. 2 and 3. The side face member 22 of the airbag 14 in a state before folding includes a projected portion 22a extending in a forward direction of the vehicle and a projected portion 22b extending in a backward direction of the vehicle. The projected portions 22a and 22b are formed to be located adjacent upper and lower surfaces of the airbag, respectively.

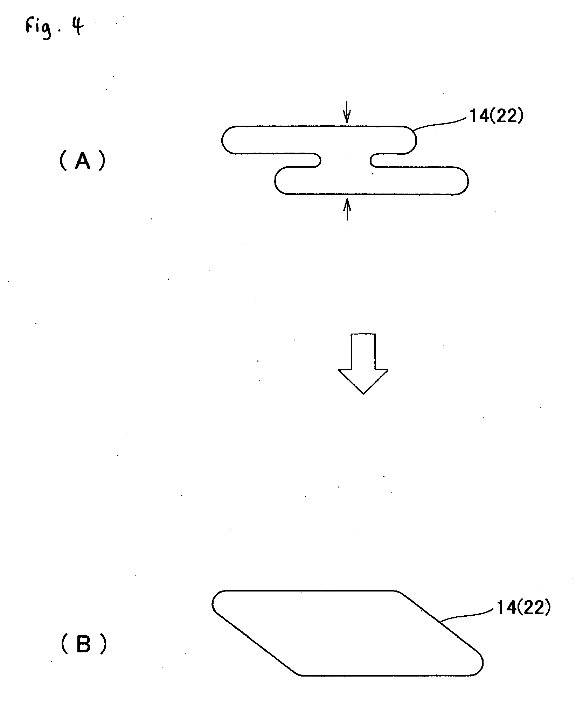

Fig. 4 is a schematic view showing variation of shapes of the side faces of the airbag according to the embodiment, wherein (A) shows a state in the middle of folding process and (B) shows a state of developed. When folding the airbag 14, as shown in the drawing (A), pressure is applied in a upper-lower direction, so that the offset projected portions are formed at front and rear sides. At the front side, an upper large projected portion (22a) extends outwardly to form unevenness, while at the rear side, a lower large projected portion (22b) extends outwardly to form an unevenness. In a developed state, as shown in Fig. 4 (B), the side face member 22 of the airbag 14 is shaped to be almost parallelogram. Here, the side face member would be a slightly-rounded parallelogram in an inflated and developed state according to a material strength or gas pressure of the airbag 14.

An important point of this embodiment is that a developing direction of the airbag 14 is shifted in a forward or backward direction of the vehicle without changing a location of the device 10 under the seat. In order to achieve this, although the side face portion 22 is shaped to be about a parallelogram in a developed state, other shapes can be applied. For example, as shown in Fig. 5, an airbag 114 having an oval shape of side face can be employed instead. In the drawing, "D1" indicates a developing direction. In this case, the developing direction D1 could be expressed by a direction parallel to left and right side lines of a parallelogram (front and rear direction of the occupant), which is virtually formed to circumscribe the airbag 114 (side face) therein, so that the area of the parallelogram with a bottom line 20a is minimized.

Fig. 4 is an explanation drawing showing a working condition (installation condition) of the waist restraining airbag device 10 according to the embodiment, wherein the airbag is in a condition of developed. When the vehicle is forward-crushed and is quickly decelerated, the inflator 18 works and a high-pressured gas is supplied from the inflator 18 into the airbag 14. When the high-pressured gas is filled in the airbag, the airbag 14 is inflated and developed and pushing the seat cushion 12 upwardly, as shown in Fig. 4.

As described above, according to the present embodiment, the airbag 14 is developed in a direction inclined forwardly, so that it is prevented that an occupant get on the airbag 14, and therefore, sufficient restraining performance to the occupant M could be obtained. Further, even in a situation in that many of structural limitations exist under a seat cushion, it is not necessary to change a location of the airbag device 10, and therefore, the device is applicable to a variety of types of vehicles.

Although an embodiment of the present invention is described, the present invention is not limited by the embodiment, and could be changed within a technical scope described in the claims. Although, according to the above described embodiment, an airbag is developed in a direction inclined forwardly, the airbag could be designed to develop in a direction inclined cross wise or backwardly. When an airbag is designed to develop in a direction inclined backwardly, a waist (pelvis) of an occupant could be restricted immediately after development of the airbag. In either case, it is not necessary to change arrangement of an airbag device under a seat cushion, where there is a plenty of arrangement limitations, and therefore, the airbag device could be applied to a variety types of vehicles.

### [BRIEF DESCRIPTION OF THE DRAWINGS]

[Fig. 1] Fig. 1 is an explanation drawing showing a working condition (installation condition) of a waist restraining airbag device according to an embodiment of the present invention, wherein the airbag is in a condition before development.
[Fig. 2] Fig. 2 is a side view illustrating a structure of the airbag device according to the embodiment.
[Fig. 3] Fig. 3 is a perspective view illustrating a structure of the airbag device according to the embodiment.
[Fig. 4] Fig. 4 is a schematic view showing variation of shapes of side faces of the airbag according to the embodiment, wherein (A) shows a state in the middle of folding process and (B) shows a state of developed.

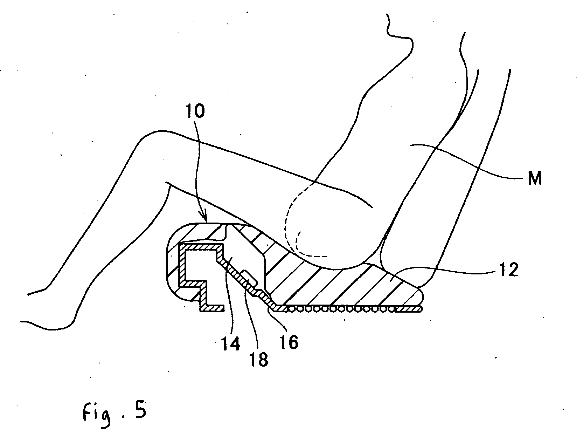

[Fig. 5] Fig. 5 is an explanation drawing showing a working condition (installation condition) of the waist restraining airbag device according to the embodiment, wherein the airbag is in a condition of developed.

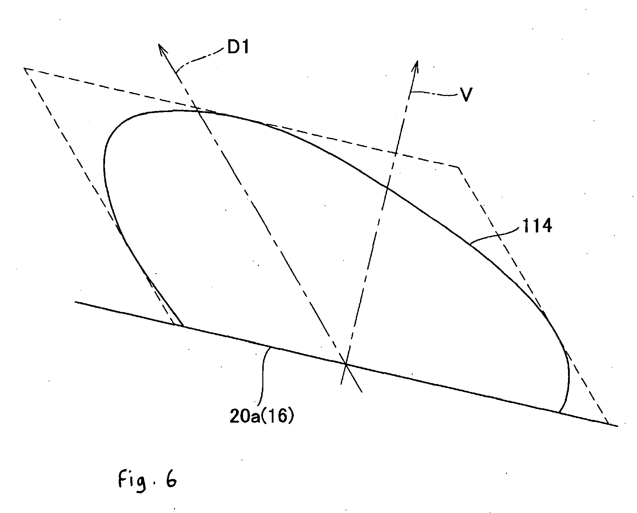

[Fig. 6] Fig. 6 is a schematic view showing an airbag in a developed state (side face portion) used for an airbag device according to another embodiment of the present invention.

### [DESCRIPTION OF THE SYMBOLS]

- 10: Waist Restraining Airbag Device
- 12: Seat Cushion
- 14, 114: Airbag
- 16: Fitting Member
- 18: Inflator
- 20: Main Body
- 20a: Bottom Face of Main Body
- 22: Side Face Portion
- D0, D1: Developing Direction
- V: Vertical Direction

## Claims

1. A waist restraining airbag device, disposed in or under a seat cushion (12) of a vehicle and adapted to restrain in an emergency the waist of an occupant sitting on the seat cushion (12) so as to limit occupant's forward movement, comprising:
an airbag (14, 114) arranged in an inflatable and expandable state, with at least a part of its bottom surface (20a) fixed; and
a gas supply device (18) for supplying inflation gas to the interior of the airbag, wherein the airbag is expandable,
**characterized in that** the expansion direction (D0, D1) of the airbag (14, 114) is inclined from a direction (V) vertical to the bottom surface (20a).

2. An airbag device, according to claim 1, wherein
the airbag comprises a main body (20) shaped to be tubular extending in right and left direction of the vehicle; and side face members (22), which close both side faces (right and left faces) of the main body (20) and are shaped to be parallelograms when the airbag is inflated.

3. An airbag device, according to claim 2, wherein
the airbag (14, 114) is folded offset in forward or backward direction of the vehicle between upper and lower portions.

4. An airbag device, according to claim 1, 2 or 3, wherein
the airbag (14, 114) is made of a metal shaped to be thin board.

5. A seat cushion device for vehicle, provided with an airbag device according to claim 1, 2, 3 or 4, which is **characterized by** comprising:
a seat frame to which a bottom surface (20a) of the airbag is fixed.

## Patentansprüche

1. Beckenrückhalteairbagvorrichtung, welche in oder unter einem Sitzkissen (12) eines Fahrzeugs angeordnet und dazu angepasst ist, bei einem Notfall die Hüfte eines auf dem Sitzkissen (12) sitzenden Insassen zurückzuhalten, um so die Vorwärtsbewegung des Insassen zu begrenzen, mit:
- einem Airbag (14, 114), der in einem aufblasbaren und ausdehnbaren Zustand angeordnet ist, wobei wenigstens ein Teil seiner Bodenfläche (20a) befestigt ist, und
- einer Gaszuführvorrichtung (18) zum Zuführen von Aufblasgas ins Innere des Gassacks, wobei der Gassack ausdehnbar ist,
**dadurch gekennzeichnet, dass** die Ausdehnungsrichtung (D0, D1) des Gassacks (14, 114) bezüglich der Richtung (V), welche sich senkrecht von der Bodenfläche (20a) erstreckt, geneigt ist.

2. Airbagvorrichtung nach Anspruch 1, wobei
der Airbag einen Hauptkörper (20), welcher rohrförmig dahingehend geformt ist, dass er sich in Links-Rechts-Richtung des Fahrzeugs erstreckt, und Stirnseitenelemente (22), die die beiden Stirnseiten (rechte und linke Stirnseiten) des Hauptkörpers (20) schließen und welche so geformt sind, dass sie im expandierten Zustand Parallelogramme sind, aufweist.

3. Airbagvorrichtung nach Anspruch 2, wobei der Airbag (14,114) zwischen einem oberen und einem unteren Teil in Vorwärts- oder Rückwärtsrichtung des Fahrzeugs versetzt gefaltet ist.

4. Airbagvorrichtung nach Anspruch 1, 2 oder 3, wobei der Airbag (14, 114) aus dünnem Metallblech gemacht ist.

5. Sitzkissenvorrichtung für ein Fahrzeug, welche mit einer Airbagvorrichtung nach Anspruch 1, 2, 3 oder 4 ausgestattet ist, **gekennzeichnet durch** einen Sitzrahmen, an welchem die Bodenfläche (20a) des Gassacks befestigt ist.

## Revendications

1. Dispositif de coussin de sécurité gonflable destiné à emprisonner la taille, disposé dans ou sous un coussin de siège (12) d'un véhicule et adapté pour emprisonner en cas d'urgence la taille d'un occupant qui est assis sur le coussin de siège (12) de façon à limiter un déplacement vers l'avant de l'occupant, comprenant :
✔ un coussin de sécurité gonflable (14, 114) disposé dans un état pouvant être gonflé et s'expanser, une partie au moins de sa surface inférieure (20a) étant fixée ; et
✔ un Dispositif de fourniture de gaz (18) destiné à fournir le gaz de gonflage à l'intérieur du coussin de sécurité gonflable, dans lequel le coussin de sécurité gonflable peut s'exanser ;
**caractérisé en ce que** la direction d'expansion (D0, D1) du coussin de sécurité gonflable (14, 114) est inclinée à partir d'une direction verticale (V) vers la surface inférieure (20a).

2. Dispositif de coussin de sécurité gonflable, selon la revendication 1, dans lequel le coussin de sécurité gonflable comprend un corps principal (20) qui présente une forme tubulaire qui s'étend dans les directions droite et gauche du véhicule ; et des éléments de faces latérales (22), qui sont proches des deux faces latérales (faces droites et gauches) du corps principal (20) et présentant des formes de parallélogrammes lorsque le coussin de sécurité gonflable est gonflé.

3. Dispositif de coussin de sécurité gonflable, selon la revendication 2, dans lequel le coussin de sécurité gonflable (14, 114) est plié décalé dans la direction vers l'avant ou vers l'arrière du véhicule entre des parties supérieures et inférieures.

4. Dispositif de coussin de sécurité gonflable, selon l'une quelconque des revendications 1, 2 ou 3, dans lequel le coussin de sécurité gonflable (14, 114) est réalisé dans un métal mis en forme de façon à se présenter comme un panneau mince.

5. Dispositif de coussin de siège destiné à un véhicule, doté d'un dispositif de coussin de sécurité gonflable selon l'une quelconque des revendications 1, 2, 3 ou 4, **caractérisé par le fait qu'**il comprend une armature de siège à laquelle une surface inférieure (20a) du coussin de sécurité gonflable est fixée.
